# EUROPEAN PATENT SPECIFICATION

(11) **EP 4 032 227 B1**
(45) Date of publication and mention of the grant of the patent: **05.11.2025**
(21) Application number: 20780271.1
(22) Date of filing: 15.09.2020
(51) Int. Cl.: H04L 9/32, G06F 21/73

(54) **ELECTRONIC DEVICE AND ASSOCIATED METHOD OF MANUFACTURE**
ELEKTRONISCHE VORRICHTUNG UND VERFAHREN ZU IHRER HERSTELLUNG
DISPOSITIF ÉLECTRONIQUE ET PROCÉDÉ DE FABRICATION ASSOCIÉ

(30) Priority: 19.09.2019 GB 201913526
(43) Date of publication of application: 27.07.2022
(73) Proprietor: Pragmatic Semiconductor Limited, Cambridge CB4 0WH (GB)
(72) Inventor: COBB, Brian, Cambridge, CB4 0WH (GB)
(74) Representative: Smith, Jeremy
(86) International application number: PCT/GB2020/052217
(87) International publication number: WO 2021/053325

(56) References cited:
- EP-A1- 3 193 281
- EP-A1- 3 343 601
- EP-A2- 2 876 680

## Description

The present invention relates to an electronic device, and to an associated method for manufacturing such an electronic device. The present invention has particular, but not exclusive, relevance to the random or pseudorandom assignment of numbers to an integrated circuit (IC) forming part of an electronic device.

For some applications involving ICs it is beneficial for each IC to have a number assigned to it that is globally unique, or at least has a reasonably high probability of being unique within a given population of the ICs. Whilst in some scenarios numbers may be assigned according to a predetermined pattern (e.g. sequentially) in others it is desirable for numbers to be assigned randomly. Random numbers assigned in this manner may be used in a number of different ways including, for example: to identify an individual IC; to differentiate between respective communication signals received from different ICs; as a security key for accessing the IC and/or communicating with it; or the like.

Radio Frequency Identification (RFID) is, for example, one such application in which randomly assigned numbers may be used. For example, random numbers may be used for identification purposes (e.g. as a tag identifier) or to introduce a degree of randomness to timers used for determining when a communication should be attempted in order to reduce the likelihood of repeated collisions between communications from different tags.

Currently, methods for assigning such random numbers typically involve generation of a random number externally and the storage of the generated number in a memory circuit, usually in the form of a one-time programmable (OTP) read-only memory (ROM, or PROM), in the IC. For example, memory circuits in the form of OTP ROMs may be programmed optically (e.g. by a laser which is used to 'blow' conductive fuses). Alternatively, OTP ROMs may be programmed electronically (e.g. by applying a current overload to blow a fuse, or by applying voltage overload to breakdown a capacitor - an anti-fuse). With each approach to assigning such random numbers, comes associated disadvantages, for example in terms of programming speed, manufacturing or programming complexity, physical size (IC footprint) and/or cost.

EP3193281A1 discloses an electronic device, and a method of manufacturing such a device targeted at electronic devices such as smart cards that were susceptible to tampering because it was difficult to verify whether a particular combination of integrated circuit (e.g., a processing unit) and a device body (e.g., a substrate) on which the integrated circuit was mounted was authentic. EP3193281A1 seeks to address this problem by providing an electronic device comprising a substrate, an integrated circuit, and a layer of glue (comprising a distribution of conductive particles) between the substrate and the integrated circuit. A set of driving electrodes, a receiving electrode, and a counter electrode are each coupled to the glue and to the integrated circuit. The conductive particles electrically connect the receiving electrode, the counter electrode and at least a subset of driving electrodes, such that, if drive currents are provided to the driving electrodes, at least part of this drive currents flows to the receiving electrode through the conductive particles and the counter electrode. EP3343601A1 discloses a physical unclonable function (PUF) chip and a fabrication method. The fabrication method includes forming an array of spaced electrode plates on a top metal connection layer of a nude chip, while forming the top metal connection layer. A deposition layer is formed on the top metal connection layer between adjacent electrode plates. Openings are formed between adjacent electrode plates in a row, each opening having a circumference tangent to the adjacent electrode plates. A conductive coating layer is provided on the nude chip, the conductive coating layer including conductive particles with randomly distributed size. The nude chip is then packaged to provide the PUF chip.

It can be seen, therefore, that the generation and storage of random numbers in this way can present a considerable challenge in the manufacture of low-cost ICs that are produced in high volumes.

The invention aims to provide electronic circuitry and an associated method for manufacturing such electronic circuitry that at least partially addresses the above challenges.

Aspects of the invention are disclosed in the appended independent claims. Advantageous but optional features are recited in the appended dependent claims.

In one aspect the invention provides an electronic device comprising: a substrate on which there is provided at least one electrically conductive connection pad; an electronic circuit comprising memory circuitry having a number of memory contacts; and a layer, provided between the substrate and the electronic circuit, wherein the layer comprises an electrically insulating medium containing a spatial distribution of conductive elements that is at least partially random, whereby the layer is conductive through the thickness of the layer at locations where a conductive element extends through the thickness of the layer, and whereby the layer is non-conductive at locations where no conductive element extends through the thickness of the layer; wherein each memory contact: is arranged for electrical connection with the at least one connection pad, through the thickness of the layer, when at least one of the conductive elements extends a thickness of the layer between that memory contact and the at least one connection pad; and is arranged for electrical insulation from the at least one connection pad when no conductive elements extend the thickness of the layer between that memory contact and the at least one connection pad, whereby a selection of the memory contacts, that is at least partially random, are electrically connected to the at least one connection pad and other memory contacts are electrically insulated from the at least one connection pad, in dependence on the spatial distribution of conductive elements; and wherein the memory circuitry is configured to store a representation of a respective electrical connection status of one or more memory contacts.

The representation of the respective electrical connection status of one or more memory contacts may comprise a respective bit stored in the memory circuit representing the electrical connection status of each of the one or more memory contacts.

The electronic circuit may be configured to generate a number corresponding to the representation of the respective electrical connection status of one or more memory contacts stored in the memory circuitry. The number corresponding to the representation of the respective electrical connection status of one or more memory contacts stored in the memory circuitry may, for example, correspond directly to a binary sequence corresponding to the representation of the respective electrical connection status of one or more memory contacts. The electronic circuit may, for example, be configured to generate the number corresponding to the representation of the respective electrical connection status of one or more memory contacts by applying a mathematical function either directly or indirectly to the representation.

The electronic circuit may be configured to generate the number corresponding to the representation of the respective electrical connection status of one or more memory contacts by applying a cryptographic function directly or indirectly to the representation. The representation may be provided as at least one cryptographic key to the cryptographic function.

The electronic circuit may be configured to generate the number corresponding to the representation of the respective electrical connection status of one or more memory contacts by applying a random number generator directly or indirectly to the representation. The representation may be provided as at least one seed to the random number generator. The representation may be provided as at least one configuring input to the random number generator. The random number generator may comprise at least one shift register.

The electronic circuit may be configured to store an identifier wherein the identifier is based on the generated number.

The electronic circuit may comprise transceiver circuitry for communicating with at least one communication device, wherein the transceiver circuitry may be configured to time communications based on the generated number.

The memory contacts may have a size and/or spacing that is preconfigured to provide, on average, a predetermined proportion of memory contacts that are electrically connected to the at least one connection pad when the electronic device is assembled. The layer may be formed of at least one anisotropic conductive material.

Each conductive element may comprise at least one conductive particle. The conductive particles may have a concentration that is preconfigured to provide, on average, a predetermined proportion of memory contacts that are electrically connected to the at least one connection pad when the electronic device is assembled. The conductive particles may have a concentration uniformity that is preconfigured to vary within the layer in a manner that is at least partially random.

The electronic circuit may be an integrated circuit, for example a flexible integrated circuit. The substrate may be a flexible substrate. At least one application circuit may be provided on the substrate. The at least one application circuit may comprise at least one antenna. The at least one connection pad may be electrically connected to the application circuit. The electronic device may be configured for forming part of a radio frequency identification tag.

In one aspect the invention provides an integrated circuit for assembly with a substrate to form an electronic device according a previous aspect, the integrated circuit comprising the memory circuitry having the memory contacts; wherein the memory contacts are: arranged for electrical connection with the at least one connection pad, through the thickness of the layer, when at least one of the conductive elements extends a thickness of the layer between that memory contact and the at least one connection pad; and arranged for electrical insulation from the at least one connection pad when no conductive elements extend the thickness of the layer between that memory contact and the at least one connection pad; and wherein the memory circuitry is: configured to store a representation of a respective electrical connection status of one or more memory contacts.

In one aspect the invention provides a method of manufacturing an electronic device according to a previous aspect, the method comprising: providing the substrate on which there is provided the at least one electrically conductive connection pad; providing the electronic circuit comprising the memory circuitry having the memory contacts; and depositing a material, on a respective surface of at least one of the substrate and the electronic circuit, for forming the layer between the substrate and the electronic circuit; and assembling the substrate, the material and the electronic circuit to form the layer between the substrate and the electronic circuit, whereby to form the electronic device.

In one aspect the invention provides an electronic circuit for assembly with a substrate to form an electronic device, the substrate having at least one electrically conductive connection pad, the electronic circuit comprising: memory circuitry having a number of memory contacts; wherein the electronic circuit is configured for assembly with the substrate, with a layer provided between the substrate and the electronic circuit, to form the electronic device; wherein the layer comprises an electrically insulating medium containing a spatial distribution of conductive elements that is at least partially random, whereby the layer is conductive through the thickness of the layer at locations where a conductive element extends through the thickness of the layer, and whereby the layer is non-conductive at locations where no conductive element extends through the thickness of the layer; wherein each memory contact: is arranged for electrical connection with the at least one connection pad, through the thickness of the layer, when at least one of the conductive elements extends a thickness of the layer between that memory contact and the at least one connection pad; and is arranged for electrical insulation from the at least one connection pad when no conductive elements extend the thickness of the layer between that memory contact and the at least one connection pad, whereby, when the electronic device is assembled, a selection of the memory contacts, that is at least partially random, will be electrically connected to the at least one connection pad and other memory contacts will be electrically insulated from the at least one connection pad, in dependence on the spatial distribution of conductive elements; and wherein the memory circuitry is configured to store a representation of a respective electrical connection status of one or more memory contacts.

In one aspect the invention provides a method of manufacturing an electronic device, the method comprising: providing a substrate on which there is provided at least one electrically conductive connection pad; providing an electronic circuit comprising memory circuitry having a number of memory contacts; depositing a material, on a respective surface of at least one of the substrate and the electronic circuit, for forming a layer between the substrate and the electronic circuit, wherein the layer comprises an electrically insulating medium containing a spatial distribution of conductive elements that is at least partially random, whereby the layer is conductive through the thickness of the layer at locations where a conductive element extends through the thickness of the layer, and whereby the layer is non-conductive at locations where no conductive element extends through the thickness of the layer; and assembling the substrate, the material and the electronic circuit to form the layer between the substrate and the electronic circuit, whereby to form the electronic device; wherein each memory contact: forms electrical connection with the at least one connection pad, through the thickness of the layer, where at least one of the conductive elements extends a thickness of the layer between that memory contact and the at least one connection pad; and is electrically insulated from the at least one connection pad where no conductive elements extend the thickness of the layer between that memory contact and the at least one connection pad, whereby a selection of the memory contacts, that is at least partially random, are electrically connected to the at least one connection pad and other memory contacts are electrically insulated from the at least one connection pad, in dependence on the spatial distribution of conductive elements; and wherein the memory circuitry stores a representation of a respective electrical connection status of one or more memory contacts.

The material forming the layer may comprise an anisotropic conductive adhesive, and the method may form part of a procedure for securing the electronic circuit to the substrate using the anisotropic conductive adhesive.

The method may form part of a procedure for fabricating a radio frequency identification tag.

Embodiments of the invention will now be described, by way of example, with reference to the accompanying drawings in which:
Figure 1 is a simplified block schematic of an integrated circuit;
Figure 2 is a simplified cross section through an electronic device during a procedure to secure the integrated circuit of Figure 1 to a target substrate;
Figure 3(a) is a simplified side view of the integrated circuit of Figure 1;
Figure 3(b) is a simplified plan view of the integrated circuit of Figure 1;
Figure 4(a) is a simplified side view of an assembly of the integrated circuit of Figure 1 with a target substrate on which an application circuit is provided;
Figure 4(b) is a simplified plan view of the integrated circuit of Figure 1 with features of an application circuit shown; and
Figures 5(a) to 5(d) illustrate a number of possible ways in which a random bit pattern stored in the integrated circuit of Figure 1 may be applied in the assignment of a random number.

### Overview

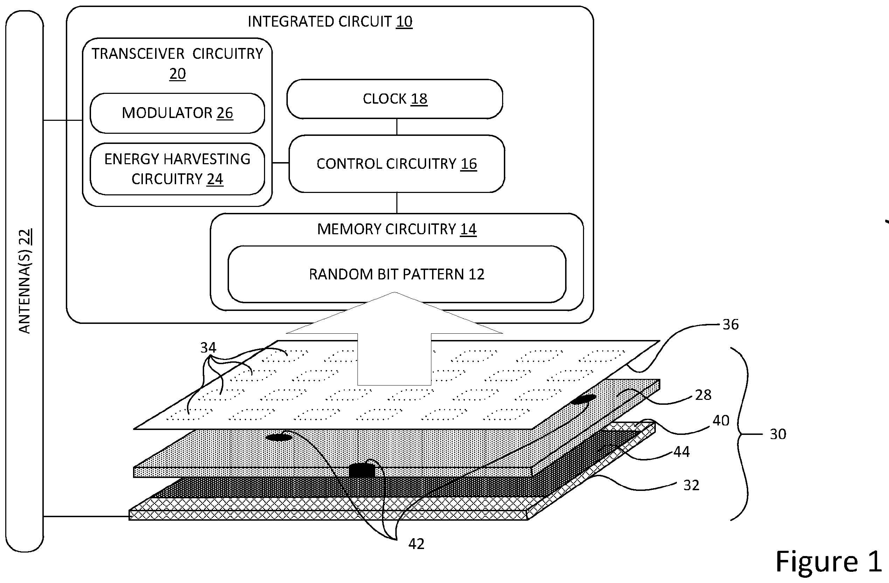

Figure 1 is a simplified block schematic of an integrated circuit 10 to which a number has been randomly assigned.

The integrated circuit 10 in this example is a Radio Frequency Identification (RFID) integrated circuit for a passive, tags talk only (TTO), RFID tag or the like.

The integrated circuit 10 comprises memory circuitry 14 in which a random bit pattern 12 is stored. This random bit pattern 12 is used as the basis for assigning the random number to the integrated circuit 10.

The integrated circuit 10 also comprises control circuitry 16 for controlling overall operation of the integrated circuit 10, and a clock 18 for providing timing signals for coordinating operation of the control circuitry 16 and hence the various functions of the tag. In this example the memory circuitry 14 comprises a read only memory (ROM).

The integrated circuit 10 also comprises transceiver circuitry 20 for receiving radio frequency (RF) excitation signals from an associated RFID reader, via one or more external antennas 22, and for transmitting information from the RFID tag to the RFID reader via the antenna(s) 22 under the control of the control circuitry 16. The transceiver circuitry 20, in this example, comprises energy harvesting circuitry 24 for harvesting energy from received excitation signals to power the integrated circuit 10, and a modulator 26 for modulating signals carrying the information to be transmitted to the RFID reader.

Beneficially, the way in which the random bit pattern 12 is stored in the memory circuitry 14 makes advantageous use of the natural properties of a physical structure that is inherently random in its form - in this example an anisotropic conductive adhesive layer 28. Specifically, the anisotropic conductive adhesive 28 acts as a randomly-distributed conducting structure during assembly of the tag, as partially illustrated at 30, such that the random bit pattern 12 is generated and stored in memory as a natural result of a process to secure the integrated circuit 10 to a target substrate 32 on which an application circuit is provided. In this example, the application circuit comprises the antenna(s) 22 of the RFID tag but may, alternatively or additionally, comprise any application circuitry designed to operate with the integrated circuit 10.

In order to facilitate the storage of the random bit pattern 12, the memory circuitry 14 is provided with an array of conductive contact pads 34 on a connection surface 36 of the integrated circuit 10 that is to be connected to the application circuit. Each contact pad 34 is connected to the memory circuitry 14 in a manner which represents a different respective memory bit.

During assembly 30, the connection surface 36 of the integrated circuit 10 is secured to the application circuit with the anisotropic conductive adhesive 28 forming a layer between the connection surface 36 of the integrated circuit 10 and a corresponding connection surface 40 of the application circuit. The anisotropic conductive adhesive 28 comprises a spatial distribution of conductive particles 42, in a non-conductive matrix, that is intrinsically random. It will be appreciated that, for simplicity of illustration, the density of conductive particles 42 shown in Figure 1, and the other figures, is significantly lower than would usually be the case in a real system. The concentration and size of the conductive particles 42, and the thickness of the anisotropic conductive adhesive 28, is such that the adhesive will allow conduction of electricity generally orthogonal to the opposing surfaces of the adhesive, through the thickness of the adhesive, without allowing transverse flow generally parallel to those opposing surfaces. However, such orthogonal conduction can still only occur where at least one conductive particle 42 is present to form a conductive element that provides a conductive path between the opposing surfaces. Accordingly, the spatial distribution of these conductive elements through the film and associated conductive paths is also intrinsically random.

Advantageously, the anisotropic conductive adhesive 28 may be in the form of an anisotropic conductive adhesive (ACA, also known as anisotropic conductive paste, ACP, or anisotropic conductive film, ACF) in which the conductive particles are dispersed in a typically epoxy resin or acrylic non-conductive matrix. ACA is commonly used to attach integrated circuits, such as flexible integrated circuits (FlexICs) or the like, to target substrates, such as antennas or other application circuits. Thus, this procedure for storing the random bit pattern 12 in the memory circuitry 14 is particularly advantageous, for such manufacturing processes, as it can be introduced with relatively little disruption.

The application circuit is provided, in this example, with at least one conductive 'memory' connection pad 44 on the connection surface 40 of the target substrate 32 for forming electrical connections with the array of memory contact pads 34, through the anisotropic conductive adhesive 28, when the integrated circuit 10 is correctly positioned relative to the application circuit and secured in place. However, the size and spacing of the memory contact pads 34 in the array are configured such that, statistically, only a proportion of the pads will be electrically connected via at least one of the conductive particles 42, through the anisotropic conductive adhesive 28, to the memory connection pad 44 of the application circuit. Conversely, a proportion of the memory contact pads 34 will, statistically, also be electrically isolated from of the application circuit by the non-conductive matrix where no conductive particle 42 (or only an insufficiently sized particle) is present between the memory contact pad 34 and the application circuit memory connection pad 44.

Since the distribution of the conductive particles 42 is random, the specific memory contact pads 34 that are electrically connected to the connection pad(s) 44 of the application circuit will also be random and can thus be used advantageously to program a random bit pattern into the memory circuitry 14. An electrical connection or short circuit via a given memory contact pad 34 (and one or more conductive particles 42) may be assigned a bit value of '1' and an open circuit may be assigned a bit value of '0' (or vice versa). For example, as those skilled in the art would appreciate, the short / open circuits may be used to short out some memory connections whilst leaving others unconnected in a similar manner to the fuses / antifuses used in known programmable ROMs. Thus, the memory circuitry 14 stores a bit pattern corresponding to the specific distribution of connected and unconnected memory contact pads 34.

There are many ways in which the random connected/unconnected states of the various memory contact pads 34, and the corresponding bit pattern 12, can be converted into a random number. For example, in a particularly straightforward example, each bit of the bit pattern 12 may be used as a respective bit of a binary sequence that directly represents the random number.

The random numbers generated in this way may be used either directly as a tag identifier (or part of a tag identifier), may be used in a function for generating a tag identifier, and/or may be used for other purposes. The random number may, for example, be used to introduce a degree of randomness to timers used for determining when a communication should be attempted in order to reduce the likelihood of repeated collisions between communications from different devices incorporating the integrated circuits.

### Electronic Device Fabrication

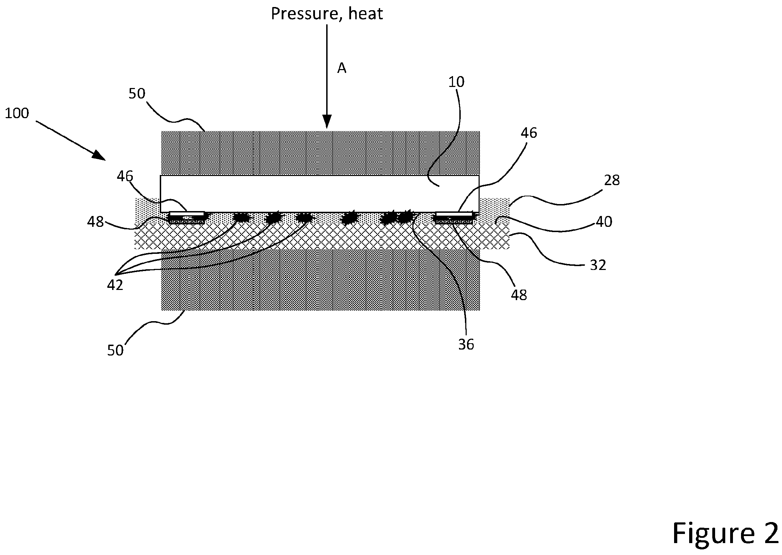

The method of storing the random bit pattern 12 in the memory 14 of the integrated circuit 10, during fabrication of an electronic device 100, will now be described in more detail with reference to Figures 2 to 4.

Figure 2 is a simplified cross section through the electronic device 100 during a procedure to secure the integrated circuit 10 to the target substrate 32 on which the application circuit is provided. As seen in Figure 2, the anisotropic conductive adhesive 28 is applied to one or both of the respective connection surfaces 36, 40 of the integrated circuit 10 and the target substrate 32. The connection surfaces 36, 40 of the integrated circuit 10 and the target substrate 32 are brought together with the conductive contact pads 46 of the integrated circuit 10 correctly aligned with the corresponding conductive contact pads 48 on the connection surface 40 of the target substrate 32. These conductive pads 46, 48 may, for example, be arranged to conduct power or data signals, or both, between the integrated circuit 10 and the application circuit. As described with reference to Figure 1 above, the additional conductive memory contact pads 34 that connect to memory circuitry within the integrated circuit 10 are also provided on the integrated circuit 10, and one or more corresponding memory connection pads 44 are provided on the target substrate 32. However, these are not shown in Figure 2 for reasons of simplicity.

Heat and pressure are applied to the assembly by means of a pair of thermodes 50, as illustrated by arrow 'A'. This heat and pressure acts on the assembly to compress the anisotropic conductive adhesive 28 between the connection surfaces 36, 40, to cure the adhesive, and to secure the integrated circuit 10 to the target substrate 32 at the correct location.

The concentration and size of the particles 42, and the size of the opposing conductive contact pads 46, 48, is configured such that, when the adhesive is cured and the integrated circuit 10 secured in place, the adhesive conducts electricity between the opposing conductive contact pads 46, 48.

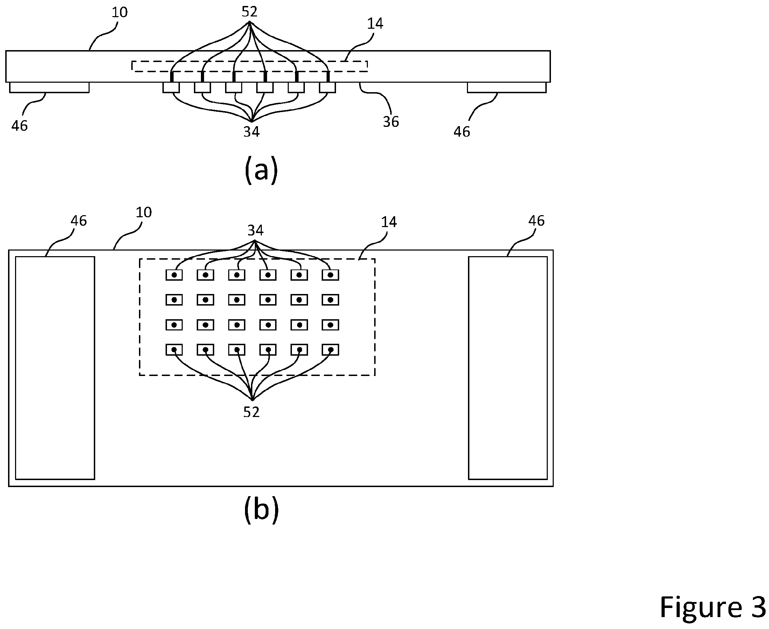

Figure 3(a) is a simplified side view of the integrated circuit 10 to which a random number may be assigned using the technique described with reference to Figure 1.

Figure 3(b) is a simplified plan view of the connection surface 36 of the integrated circuit 10.

As seen in Figures 3(a) and 3(b), the memory circuitry 14 is embedded within the integrated circuit 10 as indicated by the dashed line. The array of memory contact pads 34, and the other contact pads 46 for providing power and/or data signals, are provided on the connection surface 36. Each memory contact pad 34 is provided with a respective conduction path 52 to the memory circuitry 14. The conduction paths 52 may be provided, for example, by means of conductive vias or the like.

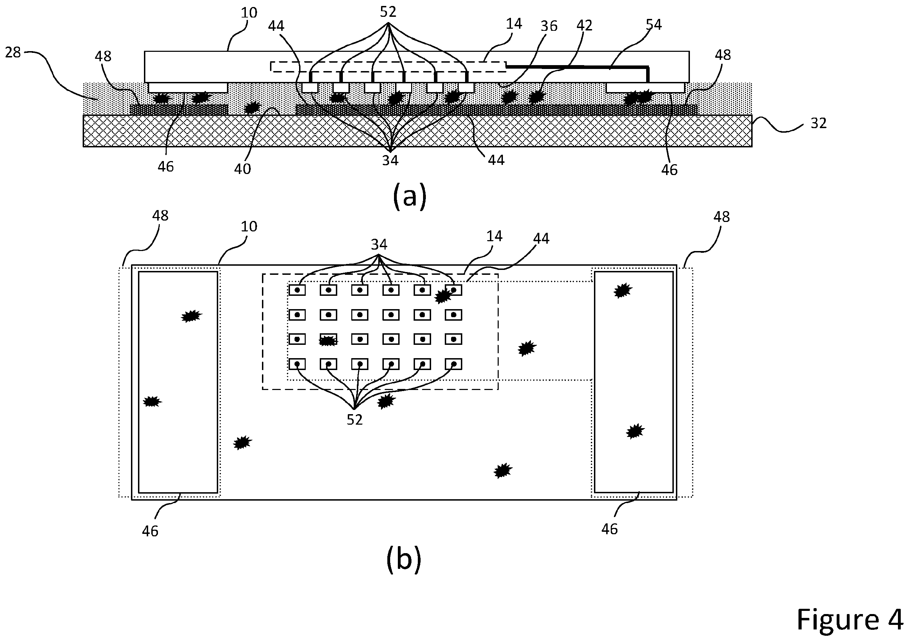

Figure 4(a) is a simplified side view of an assembly of the integrated circuit 10 together with the target substrate 32 on which is provided the application circuit to which the integrated circuit 10 is to be secured. Figure 4(b) is a simplified plan view of the connection surface 36 of the integrated circuit 10 similar to that of Figure 3(b) but with the assembled locations of the conductive pads 44, 48 of the application circuit, and the locations of some conductive particles 42, shown for illustrative purposes.

As seen in Figures 4(a) and 4(b), the conductive pads 44, 48 of the application circuit include power and/or data signal contact pads 48 that are arranged, on the contact surface 40 of the substrate 32, for alignment with the power and/or data signal contact pads 46 of the integrated circuit 10, when the integrated circuit 10 is correctly aligned with, and secured to, the substrate 32. The conductive pads 44, 48 of the application circuit also comprise at least one memory connection pad 44 arranged to align with the array of memory contact pads 34 of the integrated circuit 10 when the integrated circuit 10 is correctly aligned with, and secured to, the substrate 32.

The conductive pads 34, 44, 46, 48 may be formed form any suitable conventional materials known in the art, such as gold, aluminium, copper, titanium, molybdenum, or the like and may be formed using conventional techniques such as printing or lithography-based techniques.

As a result of the random distribution of conductive particles in the anisotropic conductive adhesive 28, when the integrated circuit 10 is correctly aligned with, and secured to the substrate 32, a random arrangement of electrical paths may be formed from the memory circuitry 14 to the memory connection pad(s) 44 of the application circuit. These electrical paths are formed through the vias 52, memory contact pads 34 of the integrated circuit 10, and conductive particles 42 in the anisotropic conductive adhesive 28 (where the conductive particles 42 happen to form a connection between a given memory contact pad 34 of the integrated circuit 10 and the memory connection pad(s) 44 of the application circuit).

It will be appreciated that, in the simplified example shown, whilst only two particles are shown that form connections to the memory contact pads 34, in reality there may be many more.

In the illustrated example, the connection pad 44 provided on the substrate 32 is connected to one of the large power and/or data signal contact pads 48 of the application circuit (as shown by the dotted line), and this contact pad 48 is arranged to connect to the integrated circuit 10, through the anisotropic conductive adhesive 28, to form an electrical return 54 for the memory circuitry 14. It will be appreciated, however, that the electrical return may be via any other suitable contact. For example, the connection pad 44 may be connected directly through the anisotropic conductive film 28 to a dedicated and/or smaller integrated circuit contact pad neighbouring the array of memory contact pads 34, or the like, to provide the electrical return.

The memory circuitry 14 of the integrated circuit 10 is, in effect, configured to 'detect' which memory contact pads 34 are electrically connected to the corresponding application circuit connection pad 44. A short circuit between a given memory contact pad 34 and the corresponding application circuit connection pad 44 indicates the presence of at least one conductive particle 42. Conversely, an open circuit, due to the electrical insulation provided by the non-conductive (e.g. epoxy) matrix and any native oxide formation on the memory contact pad 34, indicates the absence of a conductive particle 42. Thus, by assigning a bit value based on the state of each integrated memory contact pad 34 (e.g. zero for open circuit, one for short circuit) the memory circuitry 14 is able to automatically convert the random distribution of conductive particles 42 into a stored random bit pattern that can be used as a direct representation of a random number or as the basis for generating one.

It will be appreciated that the degree of randomness (or 'entropy') in the random numbers generated using the technique described above may be adjusted in a number of ways. For example, adapting the size and spacing of the memory contact pads 34 relative to a given concentration and average size of conductive particles 42 in the anisotropic conductive adhesive 28 will affect the probability of a given memory contact pad 34 being connected. Similarly, the average size and/or concentration of the conductive particles 42 in the anisotropic conductive adhesive 28 may be adjusted to provide a desired level of entropy. Moreover, whilst reducing the uniformity of the conductive particle distribution in the anisotropic conductive adhesive 28 (i.e. the homogeneity of the concentration of conductive particles per unit volume of the anisotropic conductive material) may seem counter-intuitive from a manufacturing perspective, doing so can potentially provide benefits in terms of increased entropy without compromising other manufacturing metrics. Accordingly, varying the uniformity of the conductive particle distribution within the anisotropic conductive layer 28 in a random or semi-random manner can also provide additional benefits.

In order to adjust the number of different possible unique numbers, and thus the probability of number duplication within a given population of integrated circuits programmed with a random number using the described techniques, the number of integrated memory contact pads 34 may be adjusted. For example, in the method described above, in which the stored bit pattern directly represents a binary number, each additional contact pad will double the number of possible unique numbers.

### Application of Random Distribution

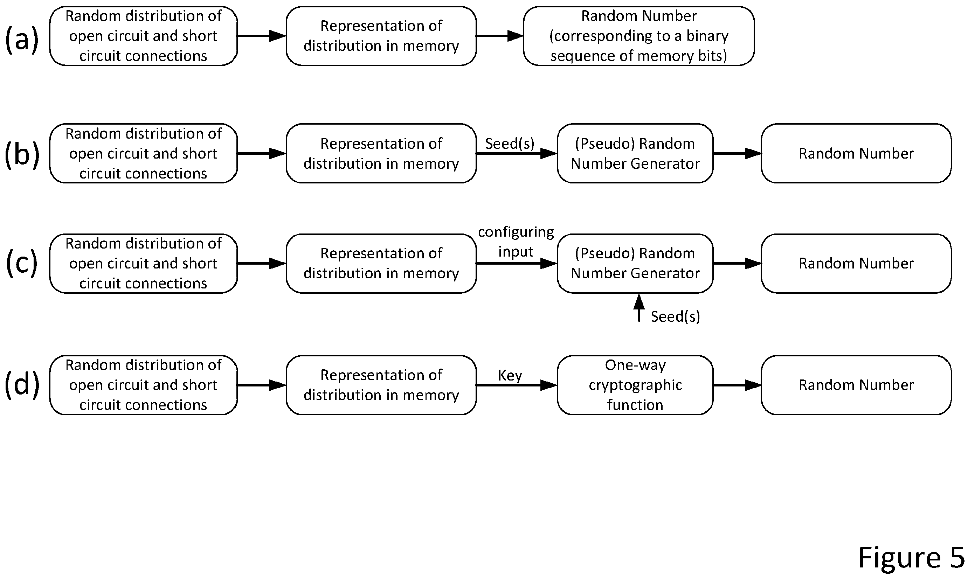

A number of possible ways in which the random distribution of open and short circuits, and the resulting random bit pattern 12, may be applied in the assignment of a random number will now be discussed, by way of example only, with reference to Figures 5(a) to 5(d).

As described above with reference to Figure 1, the random distribution of open and short circuits among the memory contact pads 34, and the corresponding random bit pattern 12, may be used directly to represent the bits of a binary sequence and hence an assigned random number, as illustrated in Figure 5(a). This assigned random number may then be used for identification, communication and/or other purposes. However, whilst such direct representation of the stored bit pattern as a binary sequence has benefits in terms of simplicity, the distribution of numbers generated randomly using such a technique may have a tendency to generate numbers having certain statistical characteristics (e.g. a certain proportion of ones and zeros depending on the probability of each memory contact being connected).

A more even distribution of randomly generated numbers may be achieved by using the bits of the stored random bit pattern 12 as the basis for one or more seeds input to a pseudo-random number generator (e.g. forming part of the control circuitry shown in Figure 1) as illustrated in Figure 5(b).

In a variation on this technique the bits of the stored random bit pattern 12 may be used as a configuring input for a pseudo-random number generator that is seeded from elsewhere, as illustrated in Figure 5(c). For example, the configuring signal could configure the connections of circuitry, such as a feedback shift register, operating as a pseudo-random number generator.

The use of a pseudo-random number generator also has the advantage that where the assigned random number is accessible externally (e.g. where it is used as a readable tag identifier) the bit pattern stored in memory will not be as easily derivable directly from the accessible information.

In another application, the stored random bit pattern 12 (or a random number represented by it) may be used as a cryptographic key input to a one-way cryptographic function, such as a cryptographic hashing function or the like, as illustrated in Figure 5(d). The use of a one-way cryptographic function would make derivation of the actual bit pattern stored in the memory even more secure.

It will be appreciated that in addition, or as an alternative, to a random number generator and/or cryptographic function, any other suitable mathematical function may be applied in the generation of the random number assigned to the integrated circuit.

### Modifications and Alternatives

A detailed embodiment has been described above. As those skilled in the art will appreciate, a number of modifications and alternatives can be made to the above embodiments whilst still benefiting from the inventions embodied therein.

For example, it will be appreciated that, whilst the beneficial method of assigning random numbers to electronic circuitry has been described with specific reference to an RFID integrated circuit for a passive TTO RFID tag, the method can be used for any electronic circuitry requiring assignment of a random number. In the RFID field, for example, the method may be used for assigning random numbers to electronic circuits for any form of RFID tags using any communication protocol, including active tags, tags that operate in accordance with a tags talk first (TTF) protocol and tags that operate in accordance with a reader talks first (RTF) protocol. Moreover, whilst the method is particularly beneficial for RFID type applications, the method also has benefits for electronic circuitry for other non-RFID applications.

Moreover, whilst the techniques described are particularly advantageous for electronic devices that are manufactured using processes that already make use of anisotropic conductive adhesive films (e.g. to secure integrated circuits to a substrate) such as procedures for fixing flexible integrated circuits to substrates on which antenna circuitry is fabricated, the techniques may also be used for other electronic devices that are not currently manufactured using anisotropic conductive adhesive.

It will be appreciated that, although the memory contacts are described as being provided in the form of an array, they may be arranged in any suitable pattern. For example, the memory contacts may be arranged at positions relative to the memory circuitry that allow for the integrated circuit design and/or the manufacturing process to be simplified, and/or allow the integrated circuit to be made more compactly.

Moreover, the memory connection pad may comprise a patterned arrangement in which relatively small connection pads or the like are provided for forming a connection to the memory contact pads and these are each connected by tracks, or the like, to a larger contact pad elsewhere.

It will be appreciated that the various methods for applying the random bit pattern to provide a random number may be combined in any appropriate manner, for example the output of a one-way cryptographic function could be used as an input to a random number generator or vice versa.

Unlike techniques using other random structures, that suffer from the challenge of stability (over temperature or other changing environmental conditions) and hence need some form of error correction, the proposed technique is relatively stable due to the deterministic binary nature of its construction (the presence or absence of a particle will generally remain fixed). Nevertheless, it will be understood that the approach could still be used in conjunction with error correction if necessary.

It will be appreciated that random spatial distribution of conductive particles may be partially random rather than completely random.

Various other modifications will be apparent to those skilled in the art and will not be described in further detail here.

## Claims

1. An electronic device (100) comprising:
a substrate (32) on which there is provided at least one electrically conductive connection pad (44);
an electronic circuit (10) comprising memory circuitry having a number of memory contacts (34); and
a layer (28), provided between the substrate (32) and the electronic circuit (10), wherein the layer (28) comprises an electrically insulating medium containing a spatial distribution of conductive elements (42) that is at least partially random, whereby the layer (28) is conductive through the thickness of the layer at locations where a conductive element (42) extends through the thickness of the layer (28), and whereby the layer (28) is non-conductive at locations where no conductive element extends through the thickness of the layer;
wherein each memory contact (34): is arranged for electrical connection with the at least one connection pad (44), through the thickness of the layer (28), when at least one of the conductive elements (42) extends a thickness of the layer (28) between that memory contact (34) and the at least one connection pad (44); and is arranged for electrical insulation from the at least one connection pad (44) when no conductive elements (42) extend the thickness of the layer (28) between that memory contact (34) and the at least one connection pad (44),
whereby a selection of the memory contacts (34), that is at least partially random, have a connected electrical connection status in which they are electrically connected to the at least one connection pad (44) and other memory contacts (34) have a disconnected electrical connection status in which they are electrically insulated from the at least one connection pad (44), in dependence on the spatial distribution of conductive elements (42); and
wherein the respective connected or disconnected electrical connection status of each of a plurality of the memory contacts (34) configures the memory circuitry to store a representation of the respective electrical connection status of each of the plurality of the memory contacts (34).

2. An electronic device as claimed in claim 1 wherein the representation of the respective electrical connection status of each of the plurality of the memory contacts (34) comprises a respective bit stored in the memory circuit representing the electrical connection status of each of the plurality of the memory contacts (34).

3. An electronic device as claimed in claim 1 or 2 wherein the electronic circuit (10) is configured to generate a number corresponding to the representation of the respective electrical connection status of each of the plurality of the memory contacts (34) stored in the memory circuitry.

4. An electronic device as claimed in claim 3 wherein the number corresponding to the representation of the respective electrical connection status of each of the plurality the memory contacts (34) stored in the memory circuitry corresponds directly to a binary sequence corresponding to the representation of the respective electrical connection status of each of the plurality of the memory contacts (34).

5. An electronic device as claimed in claim 3 wherein the electronic circuit (10) is configured to generate the number corresponding to the representation of the respective electrical connection status of each of the plurality of the memory contacts (34) by applying at least one of: a mathematical function either directly or indirectly to the representation; a cryptographic function directly or indirectly to the representation; and a random number generator directly or indirectly to the representation, optionally wherein the representation is provided as at least one seed to the random number generator.

6. An electronic device as claimed in any of claims 3 to 5 wherein the electronic circuit (10) is configured to store an identifier wherein the identifier is based on the generated number.

7. An electronic device as claimed in any of claims 3 to 6 wherein the electronic circuit (10) comprises transceiver circuitry for communicating with at least one communication device, wherein the transceiver circuitry is configured to time communications based on the generated number.

8. An electronic device as claimed in any preceding claim wherein the memory contacts (34) have a size and spacing that is preconfigured to provide, on average, a predetermined proportion of memory contacts (34) that are electrically connected to the at least one connection pad (44) when the electronic device is assembled.

9. An electronic device as claimed in any preceding claim wherein the layer (28) is formed of at least one anisotropic conductive material, and/or wherein each conductive element comprises at least one conductive particle, optionally wherein the conductive particles have at least one of: a concentration that is preconfigured to provide, on average, a predetermined proportion of memory contacts (34) that are electrically connected to the at least one connection pad (44) when the electronic device is assembled; and a concentration uniformity that is preconfigured to vary within the layer (28) in a manner that is at least partially random.

10. An electronic device as claimed in any preceding claim wherein said electronic circuit (10) is an integrated circuit, and/or wherein at least one application circuit is provided on the substrate, and/or wherein the electronic device is configured for forming part of a radio frequency identification tag.

11. An integrated circuit (10) for assembly with a substrate (32) to form an electronic device according to any preceding claim, the integrated circuit (10) comprising the memory circuitry having the memory contacts (34);
wherein the memory contacts (34) are:
arranged for having a connected electrical connection status in which they have an electrical connection with the at least one connection pad (44), through the thickness of the layer (28), when at least one of the conductive elements (42) extends a thickness of the layer (28) between that memory contact (44) and the at least one connection pad (44); and
arranged for having a disconnected electrical connection status in which they are electrically insulated from the at least one connection pad (44) when no conductive elements (42) extend the thickness of the layer (28) between that memory contact (44) and the at least one connection pad (44); and
wherein the memory circuitry is:
configured by the respective connected or disconnected electrical connection status of each of the plurality of the memory contacts (34) to store a representation of the respective connected or disconnected electrical connection status of each of the plurality of the memory contacts (34).

12. An electronic circuit (10) for assembly with a substrate (32) to form an electronic device, the substrate (32) having at least one electrically conductive connection pad (44), the electronic circuit (10) comprising:
memory circuitry having a number of memory contacts (34);
wherein the electronic circuit (10) is configured for assembly with the substrate (32), with a layer (28) provided between the substrate (32) and the electronic circuit, to form the electronic device;
wherein the layer (28) comprises an electrically insulating medium containing a spatial distribution of conductive elements (42) that is at least partially random, whereby the layer (28) is conductive through the thickness of the layer (28) at locations where a conductive element extends through the thickness of the layer (28), and whereby the layer (28) is non-conductive at locations where no conductive element extends through the thickness of the layer (28);
wherein each memory contact: is arranged for electrical connection with the at least one connection pad (44), through the thickness of the layer (28), when at least one of the conductive elements (42) extends a thickness of the layer (28) between that memory contact (44) and the at least one connection pad (44); and is arranged for electrical insulation from the at least one connection pad (44) when no conductive elements (42) extend the thickness of the layer (28) between that memory contact (44) and the at least one connection pad (44),
whereby, when the electronic device is assembled, a selection of the memory contacts (34), that is at least partially random, will have a connected electrical connection status in which they are electrically connected to the at least one connection pad (44) and other memory contacts (34) will have a disconnected electrical connection status in which they are electrically insulated from the at least one connection pad (44), in dependence on the spatial distribution of conductive elements (42); and
wherein the respective connected or disconnected electrical connection status of each of a plurality of the memory contacts (34) configures the memory circuitry to store a representation of a respective electrical connection status of each of a plurality of the memory contacts (34).

13. A method of manufacturing an electronic device, the method comprising:
providing a substrate (32) on which there is provided at least one electrically conductive connection pad (44);
providing an electronic circuit (10) comprising memory circuitry having a number of memory contacts (34);
depositing a material, on a respective surface of at least one of the substrate (32) and the electronic circuit, for forming a layer (28) between the substrate (32) and the electronic circuit, wherein the layer (28) comprises an electrically insulating medium containing a spatial distribution of conductive elements (42) that is at least partially random, whereby the layer (28) is conductive through the thickness of the layer (28) at locations where a conductive element extends through the thickness of the layer (28), and whereby the layer (28) is non-conductive at locations where no conductive element extends through the thickness of the layer (28); and
assembling the substrate (32), the material and the electronic circuit (10) to form the layer (28) between the substrate (32) and the electronic circuit, whereby to form the electronic device;
wherein each memory contact: forms electrical connection with the at least one connection pad (44), through the thickness of the layer (28), where at least one of the conductive elements (42) extends a thickness of the layer (28) between that memory contact (44) and the at least one connection pad (44); or is electrically insulated from the at least one connection pad (44) where no conductive elements (42) extend the thickness of the layer (28) between that memory contact (44) and the at least one connection pad (44), whereby a selection of the memory contacts (34), that is at least partially random, have a connected electrical connection status in which they are electrically connected to the at least one connection pad (44) and other memory contacts (34) have a disconnected electrical connection status in which they are electrically insulated from the at least one connection pad (44), in dependence on the spatial distribution of conductive elements (42); and
wherein the respective connected or disconnected electrical connection status of each of a plurality of the memory contacts (34) configures the memory circuitry to store a representation of a respective electrical connection status of each of a plurality of the memory contacts (34).

14. A method as claimed in claim 13 wherein the material forming the layer (28) comprises an anisotropic conductive adhesive, and wherein the method forms part of a procedure for securing the electronic circuit (10) to the substrate (32) using the anisotropic conductive adhesive.

15. A method as claimed in claim 13 or 14 wherein the method forms part of a procedure for fabricating a radio frequency identification tag.

## Patentansprüche

1. Elektronische Vorrichtung (100), die Folgendes umfasst:
ein Substrat (32), auf dem mindestens ein elektrisch leitendes Verbindungskissen (44) bereitgestellt ist;
einen elektronischen Schaltkreis (10), der eine Arbeitsspeicherschaltung mit einer Anzahl von Arbeitsspeicherkontakten (34) umfasst; und
eine Schicht (28), die zwischen dem Substrat (32) und dem elektronischen Schaltkreis (10) bereitgestellt ist, wobei die Schicht (28) ein elektrisch isolierendes Medium umfasst, das eine räumliche Verteilung von leitenden Elementen (42) enthält, die mindestens teilweise zufällig ist, wodurch die Schicht (28) durch die Dicke der Schicht an Stellen leitend ist, an denen sich ein leitendes Element (42) durch die Dicke der Schicht (28) erstreckt, und wodurch die Schicht (28) an Stellen nicht leitend ist, an denen sich kein leitendes Element durch die Dicke der Schicht erstreckt;
wobei jeder Arbeitsspeicherkontakt (34): für die elektrische Verbindung mit dem mindestens einen Verbindungskissen (44) durch die Dicke der Schicht (28) angeordnet ist, wenn sich mindestens eines der leitenden Elemente (42) eine Dicke der Schicht (28) zwischen diesem Arbeitsspeicherkontakt (34) und dem mindestens einen Verbindungskissen (44) erstreckt; und für eine elektrische Isolierung von dem mindestens einen Verbindungskissen (44) angeordnet ist, wenn sich keine leitenden Elemente (42) die Dicke der Schicht (28) zwischen diesem Arbeitsspeicherkontakt (34) und dem mindestens einen Verbindungskissen (44) erstrecken,
wodurch eine Auswahl, die mindestens teilweise zufällig ist, der Arbeitsspeicherkontake (34) einen verbundenen elektrischen Verbindungsstatus aufweist, in dem sie elektrisch mit dem mindestens einen Verbindungskissen (44) verbunden sind, und andere Arbeitsspeicherkontakte (34) einen getrennten elektrischen Verbindungsstatus aufweisen, in dem sie von dem mindestens einen Verbindungskissen (44) elektrisch isoliert sind, in Abhängigkeit von der räumlichen Verteilung der leitenden Elemente (42); und
wobei der jeweilige verbundene oder getrennte elektrische Verbindungsstatus jedes einer Vielzahl der Arbeitsspeicherkontakte (34) die Arbeitsspeicherschaltung konfiguriert, um eine Darstellung des jeweiligen elektrischen Verbindungsstatus jedes der Vielzahl der Arbeitsspeicherkontakte (34) zu speichern.

2. Elektronische Vorrichtung nach Anspruch 1, wobei die Darstellung des jeweiligen elektrischen Verbindungsstatus jedes der Vielzahl der Arbeitsspeicherkontakte (34) ein jeweiliges in der Arbeitsspeicherschaltung gespeichertes Bit umfasst, das den elektrischen Verbindungsstatus jedes der Vielzahl der Arbeitsspeicherkontakte (34) darstellt.

3. Elektronische Vorrichtung nach Anspruch 1 oder 2, wobei der elektronische Schaltkreis (10) konfiguriert ist, um eine Zahl zu erzeugen, die der Darstellung des jeweiligen elektrischen Verbindungsstatus jedes der Vielzahl der in der Arbeitsspeicherschaltung gespeicherten Arbeitsspeicherkontakte (34) entspricht.

4. Elektronische Vorrichtung nach Anspruch 3, wobei die Zahl, die der Darstellung des jeweiligen elektrischen Verbindungsstatus jedes der Vielzahl der Arbeitsspeicherkontakte (34) entspricht, die in der Arbeitsspeicherschaltung gespeichert sind, direkt einer binären Sequenz entspricht, die der Darstellung des jeweiligen elektrischen Verbindungsstatus jedes der Vielzahl der Arbeitsspeicherkontakte (34) entspricht.

5. Elektronische Vorrichtung nach Anspruch 3, wobei der elektronische Schaltkreis (10) konfiguriert ist, um die Zahl zu erzeugen, die der Darstellung des jeweiligen elektrischen Verbindungsstatus jedes der Vielzahl der Arbeitsspeicherkontakte (34) entspricht, indem er mindestens eines der Folgenden anwendet: eine mathematische Funktion entweder direkt oder indirekt auf die Darstellung; eine kryptographische Funktion direkt oder indirekt auf die Darstellung; und einen Zufallszahlengenerator direkt oder indirekt auf die Darstellung, wobei die Darstellung optional als mindestens ein Seed für den Zufallszahlengenerator bereitgestellt wird.

6. Elektronische Vorrichtung nach einem der Ansprüche 3 bis 5, wobei der elektronische Schaltkreis (10) konfiguriert ist, um eine Kennung zu speichern, wobei die Kennung auf der erzeugten Zahl basiert.

7. Elektronische Vorrichtung nach einem der Ansprüche 3 bis 6, wobei der elektronische Schaltkreis (10) eine Sender/Empfängerschaltung für die Kommunikation mit mindestens einer Kommunikationsvorrichtung umfasst, wobei die Sender/Empfängerschaltung konfiguriert ist, um die Kommunikation auf Grundlage der erzeugten Zahl zeitlich zu steuern.

8. Elektronische Vorrichtung nach einem der vorhergehenden Ansprüche, wobei die Arbeitsspeicherkontakte (34) eine Größe und einen Beabstandung aufweisen, die vorkonfiguriert sind, um im Durchschnitt einen vorbestimmten Anteil von Arbeitsspeicherkontakten (34) bereitzustellen, die elektrisch mit dem mindestens einen Verbindungskissen (44) verbunden sind, wenn die elektronische Vorrichtung zusammengebaut ist.

9. Elektronische Vorrichtung nach einem der vorhergehenden Ansprüche, wobei die Schicht (28) aus mindestens einem anisotropen leitenden Material ausgebildet ist, und/oder wobei jedes leitende Element mindestens ein leitendes Teilchen umfasst, wobei die leitenden Teilchen optional mindestens eines der Folgenden aufweisen: eine Konzentration, die vorkonfiguriert ist, um im Durchschnitt einen vorbestimmten Anteil von Arbeitsspeicherkontakten (34) bereitzustellen, die elektrisch mit dem mindestens einen Verbindungskissen (44) verbunden sind, wenn die elektronische Vorrichtung zusammengebaut ist; und eine Konzentrationsgleichförmigkeit, die vorkonfiguriert ist, um innerhalb der Schicht (28) auf eine Weise zu variieren, die mindestens teilweise zufällig ist.

10. Elektronische Vorrichtung nach einem der vorhergehenden Ansprüche, wobei der elektronische Schaltkreis (10) ein integrierter Schaltkreis ist, und/oder wobei mindestens ein Anwendungsschaltkreis auf dem Substrat bereitgestellt ist, und/oder wobei die elektronische Vorrichtung konfiguriert ist, um einen Teil eines Radiofrequenzidentifikationskennzeichens auszubilden.

11. Integrierter Schaltkreis (10) zum Zusammenbau mit einem Substrat (32), um eine elektronische Vorrichtung nach einem der vorhergehenden Ansprüche auszubilden, wobei der integrierte Schaltkreis (10) die Arbeitsspeicherschaltung mit den Arbeitsspeicherkontakten (34) umfasst;
wobei die Arbeitsspeicherkontakte (34) Folgendes sind:
angeordnet, um einen verbundenen elektrischen Verbindungsstatus aufzuweisen, in dem sie eine elektrische Verbindung mit dem mindestens einen Verbindungskissen (44) durch die Dicke der Schicht (28) aufweisen, wenn sich mindestens eines der leitenden Elemente (42) eine Dicke der Schicht (28) zwischen diesem Arbeitsspeicherkontakt (44) und dem mindestens einen Verbindungskissen (44) erstreckt; und
angeordnet, um einen getrennten elektrischen Verbindungsstatus aufzuweisen, in dem sie von dem mindestens einen Verbindungskissen (44) elektrisch isoliert sind, wenn sich keine leitenden Elemente (42) die Dicke der Schicht (28) zwischen diesem Arbeitsspeicherkontakt (44) und dem mindestens einen Verbindungskissen (44) erstrecken; und
wobei die Arbeitsspeicherschaltung Folgendes ist:
konfiguriert durch den jeweiligen verbundenen oder getrennten elektrischen Verbindungsstatus von jedem der Vielzahl der Arbeitsspeicherkontakte (34), um eine Darstellung des jeweiligen verbundenen oder getrennten elektrischen Verbindungsstatus von jedem der Vielzahl der Arbeitsspeicherkontakte (34) zu speichern.

12. Elektronischer Schaltkreis (10) zum Zusammenbau mit einem Substrat (32), um eine elektronische Vorrichtung auszubilden, wobei das Substrat (32) mindestens ein elektrisch leitendes Verbindungskissen (44) aufweist, wobei der elektronische Schaltkreis (10) Folgendes umfasst:
eine Arbeitsspeicherschaltung mit einer Anzahl von Arbeitsspeicherkontakten (34);
wobei der elektronische Schaltkreis (10) für den Zusammenbau mit dem Substrat (32) konfiguriert ist, wobei eine Schicht (28) zwischen dem Substrat (32) und dem elektronischen Schaltkreis bereitgestellt ist, um die elektronische Vorrichtung auszubilden;
wobei die Schicht (28) ein elektrisch isolierendes Medium umfasst, das eine räumliche Verteilung von leitenden Elementen (42) enthält, die mindestens teilweise zufällig ist, wodurch die Schicht (28) durch die Dicke der Schicht (28) an Stellen leitend ist, an denen sich ein leitendes Element durch die Dicke der Schicht (28) erstreckt, und wodurch die Schicht (28) an Stellen nicht leitend ist, an denen sich kein leitendes Element durch die Dicke der Schicht (28) erstreckt;
wobei jeder Arbeitsspeicherkontakt: für die elektrischen Verbindung mit dem mindestens einen Verbindungskissen (44) durch die Dicke der Schicht (28) angeordnet ist, wenn sich mindestens eines der leitenden Elemente (42) eine Dicke der Schicht (28) zwischen diesem Arbeitsspeicherkontakt (44) und dem mindestens einen Verbindungskissen (44) erstreckt; und für eine elektrische Isolierung von dem mindestens einen Verbindungskissen (44) angeordnet ist, wenn sich keine leitenden Elemente (42) die Dicke der Schicht (28) zwischen diesem Arbeitsspeicherkontakt (44) und dem mindestens einen Verbindungskissen (44) erstrecken,
wodurch, wenn die elektronische Vorrichtung zusammengebaut ist, eine Auswahl, die mindestens teilweise zufällig ist, der Arbeitsspeicherkontakte (34) einen verbundenen elektrischen Verbindungsstatus aufweist, in dem sie elektrisch mit dem mindestens einen Verbindungskissen (44) verbunden sind, und andere Arbeitsspeicherkontakte (34) einen getrennten elektrischen Verbindungsstatus aufweisen, in dem von dem mindestens einen Verbindungskissen (44) elektrisch isoliert sind, in Abhängigkeit von der räumlichen Verteilung der leitenden Elemente (42); und
wobei der jeweilige verbundene oder getrennte elektrische Verbindungsstatus jedes einer Vielzahl der Arbeitsspeicherkontakte (34) die Arbeitsspeicherschaltung konfiguriert, um eine Darstellung eines jeweiligen elektrischen Verbindungsstatus jedes einer Vielzahl der Arbeitsspeicherkontakte (34) zu speichern.

13. Verfahren zum Herstellen einer elektronischen Vorrichtung, wobei das Verfahren Folgendes umfasst:
Bereitstellen eines Substrats (32), auf dem mindestens ein elektrisch leitendes Verbindungskissen (44) bereitgestellt ist;
Bereitstellen eines elektronischen Schaltkreises (10), der eine Arbeitsspeicherschaltung mit einer Anzahl von Arbeitsspeicherkontakten (34) umfasst;
Abscheiden eines Materials auf einer jeweiligen Oberfläche mindestens eines des Substrats (32) und des elektronischen Schaltkreises, um eine Schicht (28) zwischen dem Substrat (32) und dem elektronischen Schaltkreis auszubilden, wobei die Schicht (28) ein elektrisch isolierendes Medium umfasst, das eine räumliche Verteilung von leitenden Elementen (42) enthält, die mindestens teilweise zufällig ist, wodurch die Schicht (28) durch die Dicke der Schicht (28) an Stellen leitend ist, an denen sich ein leitendes Element durch die Dicke der Schicht (28) erstreckt, und wodurch die Schicht (28) an Stellen nicht leitend ist, an denen sich kein leitendes Element durch die Dicke der Schicht (28) erstreckt; und
Zusammenbauen des Substrats (32), des Materials und des elektronischen Schaltkreises (10), um die Schicht (28) zwischen dem Substrat (32) und dem elektronischen Schaltkreis auszubilden, wodurch die elektronische Vorrichtung ausgebildet wird;
wobei jeder Arbeitsspeicherkontakt: eine elektrische Verbindung mit dem mindestens einen Verbindungskissen (44) durch die Dicke der Schicht (28) ausbildet, wobei sich mindestens eines der leitenden Elemente (42) eine die Dicke der Schicht (28) zwischen diesem Arbeitsspeicherkontakt (44) und dem mindestens einen Verbindungskissen (44) erstreckt; oder von dem mindestens einen Verbindungskissen (44) elektrisch isoliert ist, wobei sich keine leitenden Elemente (42) die Dicke der Schicht (28) zwischen diesem Arbeitsspeicherkontakt (44) und dem mindestens einen Verbindungskissen (44) erstrecken, wodurch eine Auswahl, die mindestens teilweise zufällig ist, der Arbeitsspeicherkontakte (34) einen verbundenen elektrischen Verbindungsstatus aufweist, in dem sie elektrisch mit dem mindestens einen Verbindungskissen (44) verbunden sind, und andere Arbeitsspeicherkontakte (34) einen getrennten elektrischen Verbindungsstatus aufweisen, in dem sie von dem mindestens einen Verbindungskissen (44) elektrisch isoliert sind, in Abhängigkeit von der räumlichen Verteilung der leitenden Elemente (42); und
wobei der jeweilige verbundene oder getrennte elektrische Verbindungsstatus jedes einer Vielzahl der Arbeitsspeicherkontakte (34) die Arbeitsspeicherschaltung konfiguriert, um eine Darstellung eines jeweiligen elektrischen Verbindungsstatus jedes einer Vielzahl der Arbeitsspeicherkontakte (34) zu speichern.

14. Verfahren nach Anspruch 13, wobei das Material, das die Schicht (28) ausbildet, einen anisotropen leitenden Klebstoff umfasst und wobei das Verfahren Teil einer Vorgehensweise für das Sichern des elektronischen Schaltkreises (10) an dem Substrat (32) unter Verwendung des anisotropen leitenden Klebstoffs ausbildet.

15. Verfahren nach Anspruch 13 oder 14, wobei das Verfahren Teil einer Vorgehensweise für die Fertigung eines Radiofrequenzidentifikationskennzeichens ausbildet.

## Revendications

1. Dispositif électronique (100), comprenant :
un substrat (32) sur lequel est situé au moins un plot de connexion électroconducteur (44) ;
un circuit électronique (10) comprenant une circuiterie de mémoire comportant un certain nombre de contacts de mémoire (34) ; et
une couche (28), située entre le substrat (32) et le circuit électronique (10), la couche (28) comprenant un milieu électro-isolant contenant une distribution spatiale d'éléments conducteurs (42) qui est au moins en partie aléatoire, de telle sorte que la couche (28) soit conductrice sur l'épaisseur de la couche au niveau d'emplacements où un élément conducteur (42) s'étend sur l'épaisseur de la couche (28), et de telle sorte que la couche (28) soit non conductrice au niveau d'emplacements où aucun élément conducteur ne s'étend sur l'épaisseur de la couche ;
chaque contact de mémoire (34) : étant conçu pour être connecté électriquement à l'au moins un plot de connexion (44), sur l'épaisseur de la couche (28), lorsqu'au moins un des éléments conducteurs (42) s'étend sur une épaisseur de la couche (28) entre ce contact de mémoire (34) et l'au moins un plot de connexion (44) ; et étant conçu pour assurer une isolation électrique par rapport à l'au moins un plot de connexion (44) lorsqu'aucun élément conducteur (42) ne s'étend sur l'épaisseur de la couche (28) entre ce contact de mémoire (34) et l'au moins un plot de connexion (44),
de telle sorte qu'une sélection des contacts de mémoire (34), qui est au moins partiellement aléatoire, présente un état de connexion électrique connectée dans lequel ils sont connectés électriquement à l'au moins un plot de connexion (44) et que d'autres contacts de mémoire (34) présentent un état de connexion électrique déconnectée dans lequel ils sont isolés électriquement de l'au moins un plot de connexion (44), en fonction de la distribution spatiale des éléments conducteurs (42) ; et
l'état de connexion électrique connectée ou déconnectée respectif de chaque contact de mémoire d'une pluralité des contacts de mémoire (34) configure la circuiterie de mémoire pour stocker une représentation de l'état de connexion électrique respectif de chaque contact de mémoire de la pluralité des contacts de mémoire (34).

2. Dispositif électronique selon la revendication 1, la représentation de l'état de connexion électrique respectif de chaque contact de mémoire de la pluralité des contacts de mémoire (34) comprenant un bit respectif stocké dans le circuit de mémoire représentant l'état de connexion électrique de chaque contact de mémoire de la pluralité des contacts de mémoire (34).

3. Dispositif électronique selon la revendication 1 ou 2, le circuit électronique (10) étant configuré pour générer un nombre correspondant à la représentation de l'état de connexion électrique respectif de chaque contact de mémoire de la pluralité de contacts de mémoire (34) stockés dans la circuiterie de mémoire.

4. Dispositif électronique selon la revendication 3, le nombre correspondant à la représentation de l'état de connexion électrique respectif de chaque contact de mémoire de la pluralité des contacts de mémoire (34) stockés dans la circuiterie de mémoire correspondant directement à une séquence binaire correspondant à la représentation de l'état de connexion électrique respectif de chaque contact de mémoire de la pluralité des contacts de mémoire (34).

5. Dispositif électronique selon la revendication 3, le circuit électronique (10) étant configuré pour générer le nombre correspondant à la représentation de l'état de connexion électrique respectif de chaque contact de mémoire de la pluralité de contacts de mémoire (34) en appliquant au moins l'une des méthodes suivantes : une fonction mathématique directement ou indirectement à la représentation ; une fonction cryptographique directement ou indirectement à la représentation ; et un générateur de nombres aléatoires directement ou indirectement à la représentation, la représentation étant éventuellement fournie comme au moins une amorce au générateur de nombres aléatoires.

6. Dispositif électronique selon l'une quelconque des revendications 3 à 5, le circuit électronique (10) étant configuré pour stocker un identifiant, l'identifiant étant basé sur le nombre généré.

7. Dispositif électronique selon l'une quelconque des revendications 3 à 6, le circuit électronique (10) comprenant une circuiterie émettrice-réceptrice pour communiquer avec au moins un dispositif de communication, la circuiterie émettrice-réceptrice étant configurée pour temporiser des communications sur la base du nombre généré.

8. Dispositif électronique selon l'une quelconque des revendications précédentes, les contacts de mémoire (34) ayant une taille et un espacement qui sont préconfigurés pour fournir, en moyenne, une proportion prédéterminée de contacts de mémoire (34) qui sont connectés électriquement à l'au moins un plot de connexion (44) lorsque le dispositif électronique est assemblé.

9. Dispositif électronique selon l'une quelconque des revendications précédentes, la couche (28) étant constituée d'au moins un matériau conducteur anisotrope, et/ou chaque élément conducteur comprenant au moins une particule conductrice, les particules conductrices ayant au moins l'une des caractéristiques suivantes : une concentration qui est préconfigurée pour fournir, en moyenne, une proportion prédéterminée de contacts de mémoire (34) qui sont connectés électriquement à l'au moins un plot de connexion (44) lorsque le dispositif électronique est assemblé ; et une uniformité de concentration qui est préconfigurée pour varier au sein de la couche (28) d'une manière qui est au moins en partie aléatoire.

10. Dispositif électronique selon l'une quelconque des revendications précédentes, ledit circuit électronique (10) étant un circuit intégré, et/ou au moins un circuit d'application étant situé sur le substrat, et/ou le dispositif électronique étant configuré pour faire partie d'une étiquette d'identification par radiofréquence.

11. Circuit intégré (10) destiné à être assemblé avec un substrat (32) pour former un dispositif électronique selon l'une quelconque des revendications précédentes, le circuit intégré (10) comprenant la circuiterie de mémoire comportant les contacts de mémoire (34) ;
les contacts de mémoire (34) étant :
conçus pour avoir un état de connexion électrique connectée dans lequel ils ont une connexion électrique avec l'au moins un plot de connexion (44), sur l'épaisseur de la couche (28), lorsqu'au moins un des éléments conducteurs (42) s'étend sur une épaisseur de la couche (28) entre ce contact de mémoire (44) et l'au moins un plot de connexion (44) ; et
conçus pour avoir un état de connexion électrique déconnectée dans lequel ils sont isolés électriquement de l'au moins un plot de connexion (44) lorsqu'aucun élément conducteur (42) ne s'étend sur l'épaisseur de la couche (28) entre ce contact de mémoire (44) et l'au moins un plot de connexion (44) ; et
la circuiterie de mémoire étant :
configurée par l'état de connexion électrique connectée ou déconnectée respectif de chaque contact de mémoire de la pluralité des contacts de mémoire (34) pour stocker une représentation de l'état de connexion électrique connectée ou déconnectée respectif de chaque contact de mémoire de la pluralité des contacts de mémoire (34).

12. Circuit électronique (10) destiné à être assemblé avec un substrat (32) pour former un dispositif électronique, le substrat (32) comportant au moins un plot de connexion électroconducteur (44), le circuit électronique (10) comprenant :
une circuiterie de mémoire comportant un certain nombre de contacts de mémoire (34) ;
le circuit électronique (10) étant configuré pour être assemblé avec le substrat (32), avec une couche (28) située entre le substrat (32) et le circuit électronique, afin de former le dispositif électronique ;
la couche (28) comprenant un milieu électro-isolant contenant une distribution spatiale d'éléments conducteurs (42) qui est au moins en partie aléatoire, de telle sorte que la couche (28) soit conductrice sur l'épaisseur de la couche (28) au niveau d'emplacements où un élément conducteur s'étend sur l'épaisseur de la couche (28), et de telle sorte que la couche (28) soit non conductrice au niveau d'emplacements où aucun élément conducteur ne s'étend sur l'épaisseur de la couche (28) ;
chaque contact de mémoire : étant conçu pour être connecté électriquement à l'au moins un plot de connexion (44), sur l'épaisseur de la couche (28), lorsqu'au moins un des éléments conducteurs (42) s'étend sur une épaisseur de la couche (28) entre ce contact de mémoire (44) et l'au moins un plot de connexion (44) ; et étant conçu pour assurer une isolation électrique par rapport à l'au moins un plot de connexion (44) lorsqu'aucun élément conducteur (42) ne s'étend sur l'épaisseur de la couche (28) entre ce contact de mémoire (44) et l'au moins un plot de connexion (44),
de telle sorte que, lorsque le dispositif électronique est assemblé, une sélection des contacts de mémoire (34), qui est au moins partiellement aléatoire, présente un état de connexion électrique connectée dans lequel ils sont connectés électriquement à l'au moins un plot de connexion (44) et que d'autres contacts de mémoire (34) présentent un état de connexion électrique déconnectée dans lequel ils sont isolés électriquement de l'au moins un plot de connexion (44), en fonction de la distribution spatiale des éléments conducteurs (42) ; et
l'état de connexion électrique connectée ou déconnectée respectif de chaque contact de mémoire d'une pluralité des contacts de mémoire (34) configurant la circuiterie de mémoire pour stocker une représentation d'un état de connexion électrique respectif de chaque contact de mémoire d'une pluralité des contacts de mémoire (34).

13. Procédé de fabrication d'un dispositif électronique, le procédé consistant à :
fournir un substrat (32) sur lequel est situé au moins un plot de connexion électroconducteur (44) ;
fournir un circuit électronique (10) comprenant une circuiterie de mémoire comportant un certain nombre de contacts de mémoire (34) ;
déposer un matériau, sur une surface respective d'au moins un élément parmi le substrat (32) et le circuit électronique, afin de former une couche (28) entre le substrat (32) et le circuit électronique, la couche (28) comprenant un milieu électro-isolant contenant une distribution spatiale d'éléments conducteurs (42) qui est au moins en partie aléatoire, de telle sorte que la couche (28) soit conductrice sur l'épaisseur de la couche (28) au niveau d'emplacements où un élément conducteur s'étend sur l'épaisseur de la couche (28), et de telle sorte que la couche (28) soit non conductrice au niveau d'emplacements où aucun élément conducteur ne s'étend sur l'épaisseur de la couche (28) ; et
assembler le substrat (32), le matériau et le circuit électronique (10) pour former la couche (28) entre le substrat (32) et le circuit électronique, afin de former le dispositif électronique ;
chaque contact de mémoire : formant une connexion électrique avec l'au moins un plot de connexion (44), sur l'épaisseur de la couche (28), lorsqu'au moins un des éléments conducteurs (42) s'étend sur une épaisseur de la couche (28) entre ce contact de mémoire (44) et l'au moins un plot de connexion (44) ; ou étant isolé électriquement de l'au moins un plot de connexion (44) lorsqu'aucun élément conducteur (42) ne s'étend sur l'épaisseur de la couche (28) entre ce contact de mémoire (44) et l'au moins un plot de connexion (44), de telle sorte qu'une sélection des contacts de mémoire (34), qui est au moins partiellement aléatoire, présente un état de connexion électrique connectée dans lequel ils sont connectés électriquement à l'au moins un plot de connexion (44) et que d'autres contacts de mémoire (34) présentent un état de connexion électrique déconnectée dans lequel ils sont isolés électriquement de l'au moins un plot de connexion (44), en fonction de la distribution spatiale des éléments conducteurs (42) ; et
l'état de connexion électrique connectée ou déconnectée respectif de chaque contact de mémoire d'une pluralité des contacts de mémoire (34) configurant la circuiterie de mémoire pour stocker une représentation d'un état de connexion électrique respectif de chaque contact de mémoire d'une pluralité des contacts de mémoire (34).

14. Procédé selon la revendication 13, le matériau formant la couche (28) comprenant un adhésif conducteur anisotrope, et le procédé faisant partie d'une procédure de fixation du circuit électronique (10) au substrat (32) au moyen de l'adhésif conducteur anisotrope.

15. Procédé selon la revendication 13 ou 14, le procédé faisant partie d'une procédure de fabrication d'une étiquette d'identification par radiofréquence.
